# EUROPEAN PATENT SPECIFICATION

(11) **EP 0 516 894 B1**
(45) Date of publication and mention of the grant of the patent: **17.04.1996**
(21) Application number: 91201363.8
(22) Date of filing: 04.06.1991
(51) Int. Cl.: A01F 12/26

(54) **Threshing drum with two-part concave**
Dreschtrommel mit zweiteiligem Dreschkorb
Dispositif batteur à contre-batteur en deux parties

(43) Date of publication of application: 09.12.1992
(73) Proprietor: NEW HOLLAND BELGIUM N.V., B-8210 Zedelgem (BE)
(72) Inventor: Desnijder, Dirk J., B-9032 Wondelgem (BE)
(74) Representative: Vandenbroucke, Alberic

(56) References cited:
- AU-A- 1 236 370
- DE-A- 2 037 658
- FR-A- 893 382
- GB-A- 1 106 941
- GB-A- 2 063 039
- US-A- 3 215 145
- SOVIET PATENTS ABSTRACTS Section PQ, Week 9023, Derwent Publications Ltd., London, GB; Class P12, AN 90-177045
- SOVIET PATENTS ABSTRACTS Section PQ, Week 8412, Derwent Publications Ltd., London, GB; Class P12, AN 84-074132
- SOVIET PATENTS ABSTRACTS Section PQ, Week 8318, Derwent Publications Ltd., London, GB; Class P12, AN 83-G0473K

## Description

The present invention relates generally to crop harvesting machines, commonly referred to as combines, and, more particularly to the concave means extending around the threshing cylinder thereof.

In known combine harvesters the threshing mechanism usually takes the form of a rotary cylinder cooperating with a concave behind which the separating mechanism is disposed in the form of a rotary straw beater and reciprocating or shaking straw walkers. Normally, in front of the threshing mechanism, a feeder house is provided which is operable to receive severed crop material from a header and to convey said material rearwardly to the threshing mechanism. The feeder house commonly comprises a chain and slat apron conveyor which releases the conveyed crop material in front of the threshing cylinder by which it subsequently is engaged and entrained between said cylinder and the threshing concave for starting the threshing operation.

The threshing concave often extends concentrically around the threshing cylinder over an arc of approximately 100° and is adjustably mounted at its inlet and outlet sides for adjusting the clearance between said cylinder and concave to suit the type of harvested crop and crop condition. As already indicated, the main function of the threshing concave is to cooperate with the threshing cylinder for performing a threshing action on the crop material which enters the combine harvester. In addition thereto and as a result of the grid-like structure of the threshing concave, large quantities of grain are already separated therethrough and conveyed further to a cleaning mechanism. The separating mechanism already referred to is operable subsequently to separate the threshed grain still contained in the straw material. The efficiency of this operation determines the crop losses and hence the capacity of the combine harvester.

Clearly one way to increase the combine capacity is to increase the separating surface e.g. by using larger straw walkers or providing an additional separating cylinder. This however would result in larger and more expensive combines. Another more suitable way to solve this problem is to provide a threshing concave which extends over a larger area of the threshing cylinder and e.g. envelops said cylinder over half of its circumference. It readily will be appreciated that such a semicircular concave, in case it would be made of one single, rigid structure, is concentrical with the threshing cylinder in only one position relative thereto. Any deviation from that position would result in a clearance between the threshing cylinder and the cooperating concave which would fluctuate from the inlet of said concave towards the outlet thereof.

A proposal to at least partially overcome this drawback is disclosed in SU-A-1.021.404, which suggests to compose the threshing concave of two individual concave sections which are hingeably attached to each other and are adjustable in unison relative to the threshing cylinder. Due to the hingeable connection, the clearance inbetween the concave sections and said cylinder are kept virtually constant along the total area of the concave during adjustment. To enable this adjustment, a complex and thus expensive rod and bell crank arrangement is however required which moreover does not allow adjustment of one concave section without moving the other.

It is therefore the objective of the present invention to overcome the aforementioned drawbacks by providing a two-part concave which is simple in construction and easy to adjust.

According to the present invention a combine harvester is provided comprising threshing and separating means including a rotatable threshing drum and cooperating concave means for processing harvested crop material therebetween as this material passes from an inlet to an outlet of said concave means;
the concave means comprising at least a leading portion and a trailing portion as seen in the direction from said inlet to said outlet and
the leading concave portion being adjustable relative to the threshing drum during operation of the combine harvester.

Said combine harvester is characterised in that the trailing portion has a fixed position relative to the threshing drum.

The leading portion mainly has a threshing function whereas the trailing portion in essence acts as a separating concave. The concave means are semicircular and the major part thereof is formed by the leading concave portion which extends over an arc of approximately 100° around the threshing cylinder and is made adjustable relative thereto.

A combine harvester in accordance with the present invention will now be described in greater detail, by way of example, with reference to the accompanying drawings, in which :
Figure 1 is a schematic side elevational view, partially in section, of a combine harvester incorporating the present invention;
Figure 2 is a side elevational view, on a larger scale, of the rearward part of the elevator housing and the threshing and separating mechanism;
Figure 3 is a section on the line III-III of Figure 2;
Figure 4 is a side elevational view, on a larger scale, of a stone trap of the combine harvester;
Figure 5 shows the stone trap as seen in the direction of arrow F in Figure 4;
Figure 6 is a side elevational view, on a larger scale, of a grain collecting conveyor and the forward part of the cleaning mechanism of the combine harvester;
Figure 7 is a partial, curtailed section on the line VII-VII of Figure 6; and
Figure 8 is a side elevational view, on a larger scale, of an alternative stone trap arrangement.

In the following description, terms such as "forward", "rearward", "left", "right", etc. are used, which are words of convenience and which are not to be construed as limiting terms.

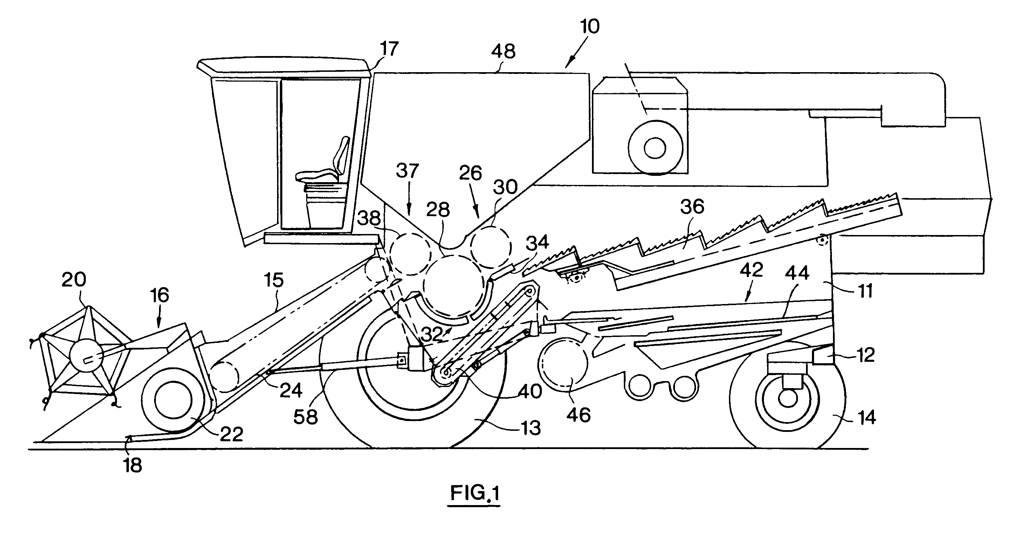

Referring now to the drawings and particularly to Figure 1, a schematic side elevational view, partially in cross section, of a crop harvesting machine 10, commonly referred to as a self-propelled combine harvester, can be seen.

The combine base unit 11 comprises a wheeled frame or housing 12 mobilely supported on a front pair of traction wheels 13 and a rear pair of steerable wheels 14 for movement over a field to harvest crop material. Pivotally mounted to the front of the base unit 11 is a feeder house 15 on the front of which is mounted a crop harvesting header 16 of conventional design.

In general, the header 16 includes a forwardly disposed reciprocating cutterbar 18 for severing crop material from the stubble. A reel 20 is disposed above and forwardly of the cutterbar 18 to sweep crop material thereover and transport it rearwardly to a consolidating auger 22 where it is converged centrally of the machine and then elevated by an elevator 24 of conventional construction in the feeder house 15 to threshing and separating means indicated generally at 26. Basically, the threshing and separating means 26 consist of a threshing cylinder 28 and a straw beater 30, provided respectively with cooperating concave means 32 and 34, and a set of longitudinally extending straw walkers 36. Inbetween the discharge end of the elevator 24 and the threshing cylinder 28, deflector means 37, comprising an additional rotor 38, are provided of which the function will be described furtheron.

Most of the grain is separated from the straw by the threshing cylinder 28 and associated concave means 32. Straw material issuing from the threshing means 28, 32 is subjected to the action of the straw beater 30 and passes therefrom to the straw walkers 36 which effect further separation of grain from the remainder of the crop material. Wanted grain together with chaff material which are separated through the concave means 32 and 34, fall onto a conveyor 40 and are transported towards a cleaning apparatus 42, which comprises sieve means 44 and a cleaning fan 46. The sieve means 44 are oscillated generally back-and-forth for moving the grain therealong while permitting the passage of cleaned grain by gravity therethrough. The grain on the sieve means 44 is subjected to a cleaning action by the fan 46 which serves to blow air through said sieve means 44 in order to remove the chaff and other impurities, such as dust , from the grain by making this material airborne for discharge from the machine. Clean grain is collected underneath the sieve means 44 from where it subsequently is transferred to a grain tank 48 on top of the combine base unit 11.

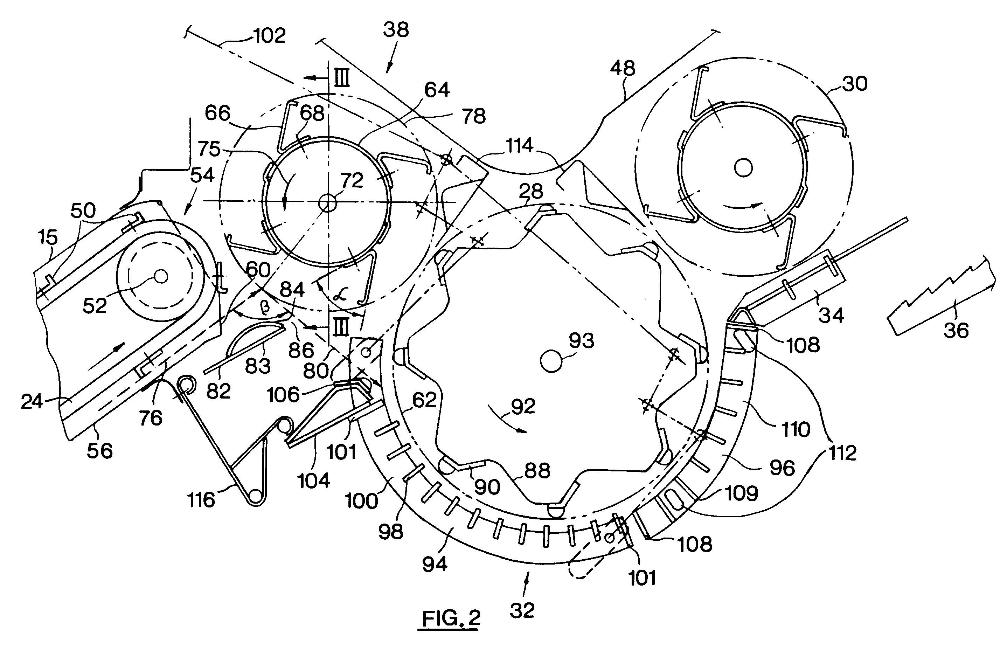

Turning now to figure 2, the configuration of the threshing and separating means 26 will be described in further detail. Typically, the elevator 24 in the feeder house 15 is in the form of an endless chain and slat apron conveyor comprising transverse slats 50. Generally, the apron conveyor 24 is driven by a drive shaft 52 positioned at the rearward end 54 of the feeder house 15, the sense of rotation being such that the conveyor 24 operates in an undershot manner, i.e. crop material engaged thereby is conveyed upwardly inbetween the underside of the apron conveyor 24 and a bottom plate 56 of the feeder house 15. The orientation of the feeder house 15 relative to the combine base unit 11 and hence the height of the header 16 relative to the ground is controlled by a pair of hydraulic lift cylinders 58 (shown in Figure 1) interconnecting the feeder house 15 and the base unit 11. By extending the cylinders 58 and pivoting the feeder house 15 about the drive shaft 52, the header 16 can be lifted from the ground.

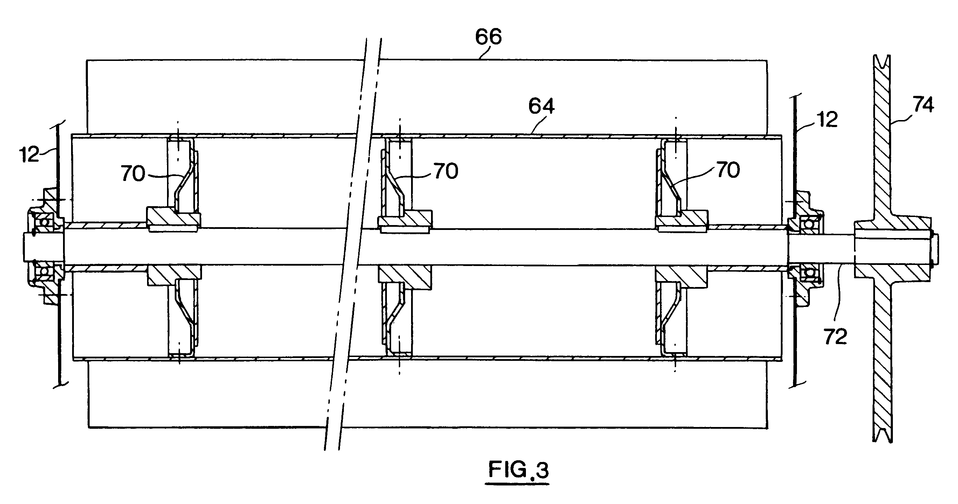

Crop material transported by the conveyor 24 travels through a crop discharge opening 60 at the rear end 54 of the feeder house 15 towards the rotor 38 already referred to. An important function of the rotor 38 is to act as a deflector beater for deflecting the layer of crop material issuing at the discharge opening 60 towards an inlet gap 62 between the threshing cylinder or drum 28 and the concave means 32 and located slightly below the horizontal plane through the centre of the drum 28. To this end, the deflector beater 38 has a tubular body 64 on which deflector plates 66 are mounted at equiangularly spaced intervals, the plates 66 extending the full length of the body 64 and being secured thereto by bolts 68. As can be observed in Figures 2 and 3, the tubular body 64 is formed by two half-cylindrical parts, each having a recessed portion at only one longitudinal side thereof for receiving the non-recessed side of the adjacent part and whereby both parts are bolted to flanges 70 provide at the inner side of the body 64. Preferably, weld nuts are secured to the inner side of both said parts receiving the bolts 68, thereby increasing serviceability of the deflector plates 66. The deflector beater 38 is drivingly connected to a shaft 72, extending centrally through the flanges 70 and rotatably supported by the side walls of the combine frame 12, at one side of which a pulley 74 is provided for driving the shaft 72 in a direction as indicated by arrow 75.

Said shaft 72 is disposed at an elevated level relative to the drive shaft 52 of the apron conveyor 24, resulting in a configuration in which the flow of crop material through the elevator discharge opening 60 (indicated by dashed arrow 76) impinges upon a lower quadrant of the deflector beater 38 in which the deflector plates 66 are rotating downwardly. Crop material intersecting the outline 78 generated by the rotating deflector plates 66 is deflected tangentially downwardly relative to said outline 78 as indicated by dashed arrow 80, straight into the inlet gap 62 mentioned above.

It will be appreciated that the apron conveyor 24 transports crop material upwardly in a dense layer since the transport area is confined by the bottom wall 56 on the one hand and the lower run of said conveyor 24 moving closely above the bottom wall 56 on the other hand. It has been found essential for the efficiency of the deflector beater 38 to present this layer of crop material to the beater 38 still in a dense, confined manner as, under such conditions, the beater 38 has the most effective impact on said layer. If, on the contrary, the layer of crop material would be allowed to expand freely in front of the beater 38, then the operation of the latter would be hampered in that the beater 38 would have to recompress the layer before transporting it further and hence energy would be lost.

Provisions therefore are taken to prevent expansion of the layer in the transition area between the crop discharge opening 60 and the impact area on the beater 38; provisions which include a detaining element 82, extending over the full width of said discharge opening 60 and being formed by a hollow-cored member having a flat portion 83 with a part-cylindrical portion 84 on top. The detaining element 82 is disposed such that the top portion 84 generally registers with the bottom wall 56 so that the layer of crop material leaving the feeder house 15 is prevented from expanding downwardly whereby the conveyor 24 otherwise would loose its positive control over the confined transport. The detaining element 82 further is disposed to extend towards the deflector beater 38, whereby a gap 86 is build of a width preferably equal to the distance measured between the slats 50 of the lower run of the conveyor 24 and the bottom plate 56, so as to preserve a constant thickness of the layer of crop material along its path around the beater 38.

The curvature of the top portion 84 of the detaining element 82 serves a threefold purpose. First of all, the front part of the top portion 84 ensures a smooth reception of crop material leaving the feeder house 15, even if the orientation of the latter is varied during operation. Secondly, the rearward part of the top portion 84 defines, in conjunction with the beater 38, the width of the discharge gap 86 and finally, the transitional part between the front and rearward parts helps to fluently divert the layer of crop material from its initial upwardly inclined direction 76 towards its downwardly inclined direction 80.

Layer expansion in an upward direction in the transitional area between the conveyor 24 and the beater 38 is substantially prevented by providing the beater 38 in the immediate vicinity of the outline generated by the conveyor slats 50, so that said transitional area is kept confined. At the same time , the beater 38 acts as a scraper element to reduce back-feeding of crop material over the conveyor 24.

The trajectory 80 of the crop towards the inlet gap 62 thus mainly is determined by the cooperating action of the deflector beater 38 on the one hand and the crop detaining element 82 on the other hand; the latter element 82 being fixedly secured to the combine frame 12 and hence having a fixed orientation relative to the deflector beater 38. Consequently, if the working orientation of the feeder house 15 relative to the combine frame 12 is altered e.g. due to providing larger or smaller sized tyres, the crop trajectory behind the deflector beater 38 is hardly influenced. This is of great importance to the threshing efficiency of the threshing drum 28 since it has been experienced that projecting the layer of crop material against the front face of a threshing drum 28 before it is entrained into the concave inlet pinch 62, is not as efficient what threshing capacity is concerned as projecting a dense layer of crop straight into said inlet pinch 62. In the latter case, the rubbing action of the threshing cylinder 28 on the crop is far better and that in essence determines the threshing efficiency.

Although the beater 38 is depicted in Figure 2 equipped with four deflector plates 66, it will be appreciated that the number of plates 66 may vary therefrom. Preferably however, this number is not reduced below four, in order to ensure a controlled grip of the plates 66 on the layer of crop material. The angle α of each plate 66 to the tangent of the body 64 is approximately 30°. Although this angle has been found suitable, it should be understood that other angles are possible and that also the shape of the deflector plates 66 may be varied substantially. As an example, the plates 66 may be wound spirally around the tubular body 64; each plate 66 comprising two oppositely wound flights which extend from the middle of the deflector beater 38 towards each respective end thereof. Such an arrangement could be advantageous for spreading the crop more evenly over the inlet 62 of the threshing cylinder 28 when the elevator 24 is unevenly loaded.

Rearwardly of the deflector beater 38, the threshing cylinder 28 is provided, which comprises flanges 88 and raspbars 90 mounted thereon. The threshing cylinder 28 is rotated in the direction of arrow 92 around axis 93, extending parallel to but at a lower level relative to as well the shaft 72 of the beater 38 as the drive shaft 52 of the apron conveyor 24. The threshing cylinder 28 partially is positioned underneath the deflector beater 38 for, on the one hand, reducing the distance between the discharge end 54 of the feeder house 15 and the threshing inlet 62, and, on the other hand, enlarging the available space inbetween the feeder house 15 and the threshing cylinder 28 in order to create the possibility to mount a deflector beater 38 with a considerable diameter, so as to optimize the impact thereof on the transported layer of crop.

As such, a configuration is obtained whereby the inlet gap 62 at the forward portion of the conveyor means 32 is located vertically underneath the rearward part of the deflector beater 38 and whereby the enclosed angle between the line connecting shaft 52 and 72 on the one hand, and the line connecting shaft 72 and axis 93 on the other hand, is in the range of 100° to 140°. Extrapolating the foregoing to the path followed by the layer of crop material, an enclosed angle β between arrow 76 and 80 is found in the range of 80° to 120°.

The concave means 32, extending around the threshing cylinder 28 over an angle of approximately 180°, is composed of two individual concave portions : a leading concave 94 at the inlet of the concave means 32 and a trailing concave 96 at the outlet thereof. The leading concave 94 comprises transverse threshing bars 98 mounted edge-on in a frame with arcuate side members 100 and front and rear transverse bars 101. To complete the concave, thereby forming a grid structure, curved slats and wires (not shown) are provided parallel to the side members 100. Although large quantities of grain are already separated through the leading concave 94, the main function thereof nevertheless consists in threshing the harvested crop material, as can be seen from the aggressive positioning of the threshing bars 98 which extend beyond the curved upper surface of the side members 100.

The leading concave 94 is adjustable relative to the threshing cylinder 28 for adjusting the clearance therebetween to suit the type of harvested crop and the crop condition; a clearance which may vary from a few millimetres for harvesting small seeds to about 40 mm for harvesting corn. To this end, the concave 94 is adjustably supported at its forward and rearward end and is adjustable by actuation of a rod and bell crank arrangement generally indicated by the chain line 102, either manually operated from the operators cab 17 or by a remote controlled electric actuator (not shown).

Rigidly attached to the front transverse bar 101 of the concave 94 is a transition beam 104 with an angled upper surface of which one side slants downwardly towards the inlet gap 62 in order to constitute a guiding surface for the crop material which is projected from the deflector beater 38. Under certain operating conditions, e.g. when harvesting " tough " crops which are difficult to thresh, it has been found advantageous to install an additional rasp bar 106 on the upper surface of the beam 104 with the rasps thereof facing in the direction of the threshing cylinder 28 in a manner such that the rotating rasp bars 90 of the latter cooperate with the stationary rasp bar 106 to already effect a fierce threshing action before the crop reaches the threshing concave 94. The transition beam 104 is shaped to directly receive the additional rasp bar 106 and orient it correctly without the need of any connecting joints. The rasps on said rasp bar 106 not necessarily extend parallel to the fore-and-aft axis of the combine harvester, but may diverge from the middle towards the respective sides thereof to, on the one hand, improve the threshing effect and, on the other hand, induce a spreading effect on the layer of crop material.

Turning again to the concave means 32, it is seen that the leading concave 94 envelops the threshing cylinder 28 over an arc of approximately 100° which is a commonly used dimension for a threshing concave. However, as already indicated, the threshing cylinder 28 is provided with a further concave 96 which closely adheres to and extends from the leading concave 94 over a further arc of approximately 80°. Said concave 96 comprises front and rear transverse bars 108, transverse slats 109 and arcuate side members 110 with curved slats and wires (not shown) inbetween. In this respect, both concaves 94 and 96 look rather similar. There are however some important differences in that first of all the transverse slats 109 do not extend beyond the curved, upper surface defined by the arcuate side members 110 and therefore are not aggressive on the layer of crop passing thereover. Furthermore, the circumferential distance measured between adjacent transverse slats 109 on the one hand and the transversely measured distance between adjacent fore-and-aft extending wires on the other hand are twice as large as the corresponding distances measured on the leading concave 94. It thus will be appreciated that, although some threshing activity still is experienced between the cylinder 28 and the concave 96, the latter in essence acts as a separating grid for separating the wanted grain from the straw material.

As seen in cross section, the trailing concave 96 has a front portion concentrically positioned relative to the cylinder 28, while a rearward portion at the outlet of said concave 96 flares radially outwardly relative thereto in order to attenuate the transition with the concave 34 underneath the straw beater 30. By this token, excessive straw breakage resulting from angular turns is avoided. As best can be seen in Figure 2, said outlet of the concave 96 is located slightly above the horizontal plane through the axis 93 of the drum 28.

During operation, the position of the trailing concave 96 relative to the cylinder 28 is fixed. A clearance between both elements of about 20 mm has been found to be suitable for most crop conditions. The setting of the trailing concave 96 is not as critical as the setting of the leading concave 94 as a result of the different functions that they have to perform ( separating vs. threshing ). Pre-adjustment of said clearance nevertheless is made feasible however by providing elongated slots 112 in the side walls of the frame 12 through which bolts are extended for fixing the concave 96 in any desired position. In conditions where the clearance of the leading concave (94) should be larger than the preset clearance of the trailing concave (96), said leading concave (94) may be adjusted askew relative to the threshing cylinder (28) whereby the clearance inbetween diminishes from the inlet gap (62) towards the outlet of said concave (94). The clearance at said outlet preferably is taken identical to the clearance of the trailing concave (96) so as to obtain a soft transition between both concaves (94 and 96).

The position of the threshing cylinder 28 relative to respectively the deflector beater 38 and the straw beater 30 has been chosen such that the outlines generated by said rotating elements closely approach one another. As a consequence, the deflector beater 38 is combed off at its rearward side by the cylinder 28 while the straw beater 30 in turn does the same on the backside of the cylinder 28. This configuration aims to avoid backfeeding and wrapping of straw material around the rotary structures. In addition thereto, rigid scraper plates 114 have been provided above the cylinder 28 to further improve the foregoing action. The diameter of the deflector beater 38 is about the two thirds of the diameter of the threshing drum 28, so that the latter is able to comb off a rather substantial area of the former.

Crop material issuing from the threshing cylinder 28 is guided by the straw beater 30 over the concave 34 towards the straw walkers 36, meanwhile further separating grain from the straw material. In order to reduce costs of parts and accessaries, the straw beater 30 may be constructed partially or even completely identical to the deflector beater 38.

The rotary elements of the threshing and separating mechanism 26 are all either directly or indirectly driven from a common main drive shaft (not shown) of the combine harvester 10, which rotates at about 1000 RPM under full load of the combine harvester engine. All said rotary elements are coupled in pairs in the following sequence. A first drive, extending from the main drive shaft to the straw beater 30, comprises a variator mechanism so that the drive speed of the straw beater 30 may be varied from 480 RPM to 1425 RPM. The straw beater 30 in turn drives the threshing cylinder 28 in a range from 420 RPM to 1250 RPM. Still further, the deflector beater 38 is driven from the threshing cylinder 28 at a speed varying from 140 RPM to 420 RPM. For harvesting certain types of vulnerable crops, e.g. soybeans, an additional speed reducer is operatively interconnected between the main drive shaft and the beater 30 so that the drive speed of all the rotors in front thereof are reduced by half. The drive shaft 52 of the straw elevator 24 is directly coupled to the main drive shaft and as such is driven at a fixed speed of 390 RPM.

Expressing the foregoing RPM 's in circumferential speed, this means that the conveyor slats 50 are moving at 2.7 m/s, and when disregarding the additional speed reducer, the deflector beater 38 and the threshing cylinder have a circumferential speed varying respectively from 3 to 9 m/s and from 13 to 40 m/s. It consequently will be observed that the circumferential speeds are increased from the elevator 24 over the deflector beater 28 towards the threshing cylinder 28, thereby improving on the one hand the transporting capacity of the arrangement and on the other hand the threshing efficiency of the threshing cylinder 28. It indeed has been experienced that increasing the speed of the layer of crop material fed into the gap 62 between the threshing drum 28 and the concave 94 has also a favourable effect on threshing efficiency.

Since the deflector beater 38 is drivingly dependent from the threshing cylinder 28, any variation of the drive speed of the latter automatically results in a corresponding change in speed of the former, gearing the operation for one another under all conditions.

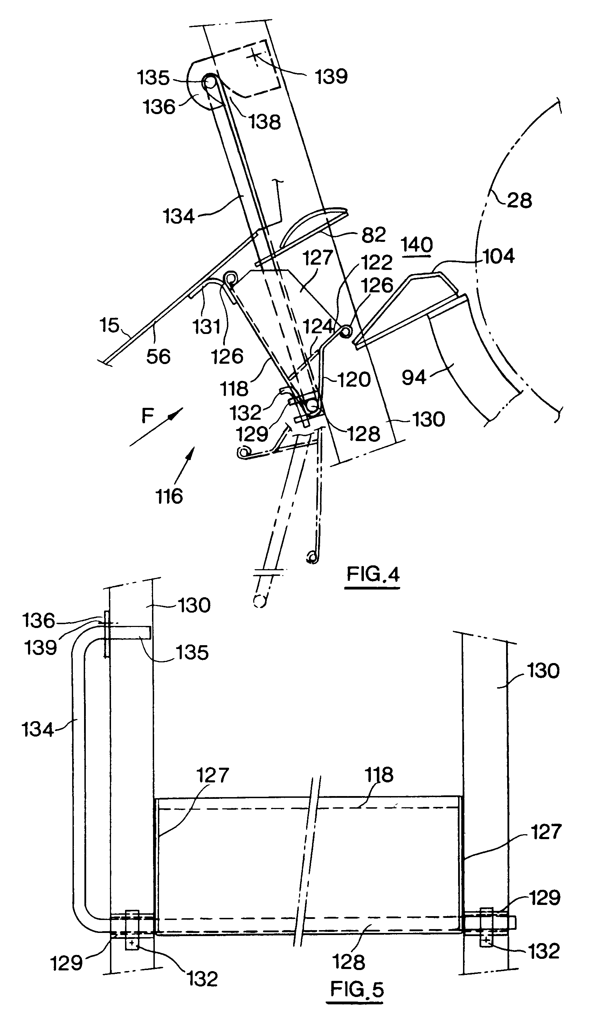

Viewing now the transition area between the deflector beater 38 and the threshing cylinder 28, a stone trap 116 is provided to collect and store stones and other hard foreign objects which accidentally are picked-up by the header 16 and fed rearwardly to the threshing and separating mechanism 26. Referring particularly to Figures 4 and 5, the stone trap 116 comprises a transversely extending shaped plate having a downwardly inclined front face 118, an almost vertical portion 120 and a rearwardly and upwardly inclined portion 122. In alignment with the portion 122 and extending towards the front, a bridging plate 124 is provided. The front plate 118, together with the plate 124 and the rearward portion 122, define a V-shaped trough in which the foreign objects are collected. The bent edges on the front plate 118 and the rearward portion 122 are intended to give greater strength to the structure. To complete the trough, meanwhile adding further rigidity thereto, side walls 127 are provided at the transverse opposite ends thereof. The front plate 118 carries a flexible sealing strip 131 which shoulders against the bottom plate 56 of the feeder house 15 in whatever position thereof.

The stone trap 116 is pivotable as a unitary structure around a transverse pivot axis at the inner side of the bent between the front plate 118 and the portion 120. Shaft means 128, either comprising stub shafts (not shown) at each side of the stone trap 116 or a single elongate rod 128, as depicted in Figure 4, are coincident with said pivot axis and are pivotally supported by two U-shaped brackets 129 attached to the front frame members 130. Keys 132 are inserted through aligned apertures in the limbs of the brackets 129 to hold the shaft 128 in place. The shaft or rod 128 is welded or otherwise secured at the bottom end of the front plate 118 across the transverse width thereof.

The stone trap 116 can be moved between a stone-collecting position and a stone-dumping position, respectively shown in full and dashed lines in Figure 4, by means of a handle 134 at the right hand side of the combine harvester 10. Said handle 134 may be attached to any part of the stone trap 116, but preferably is formed by an elongate extension of the rod 128, extending at a right angle relative thereto. The top portion 135 of the handle 134 is bent inwardly, parallel to the front face of the right hand side frame member 130, in order to form an abutment for the handle 134 when the stone trap 116 is closed. A latch member 136 with an open-ended curved slot 138 is pivotally attached at 139 to the frame member 130 for retaining the stone trap 116 in its stone-collecting position.

Foreign objects, entering the threshing mechanism, are hit by the threshing bars 90 of the threshing cylinder 28 and are thereby thrown through the stone trap inlet 140 which is defined at the top side by the flat portion 83 of the detaining element 82, extending towards the bent edge 126 of the front plate 118, and at the bottom side by the angled portion of the transition beam 104, against which the bent edge 126 of the plate 122 rests. The inlet 140 thereby constitutes a true extension to the trough of the stone trap 116 so that the stone-catching volume is more than doubled.

The stone trap 116 can easily be emptied by unlatching the latch member 136 and manually pulling the handle 134 forwardly to thereby pivot the stone trap 116 to its stone-dumping position. In an alternative embodiment (not shown), an electric or hydraulic actuator may be connected to the handle 134, enabling the combine operator to pivot the stone trap 116 back and forth between its open and closed positions without leaving the cab. In such an arrangement, the latch member 136 would not be required.

It will be appreciated from the foregoing that crop material conveyed towards the threshing cylinder 28 has to cross a transversely extending open space which is formed by the stone trap inlet 140. Accordingly, once the crop material has been impelled and released by the deflector beater 38 through the gap 86 with the detaining element 82, it is freely flowing across said inlet 140 towards the threshing cylinder 28, without being guided by a rigid wall element.

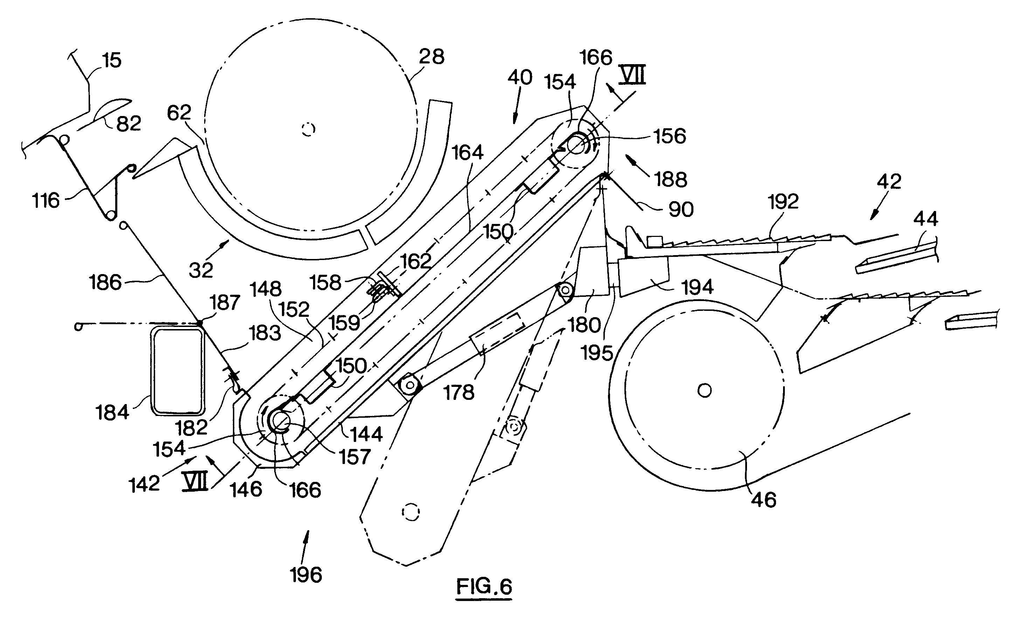

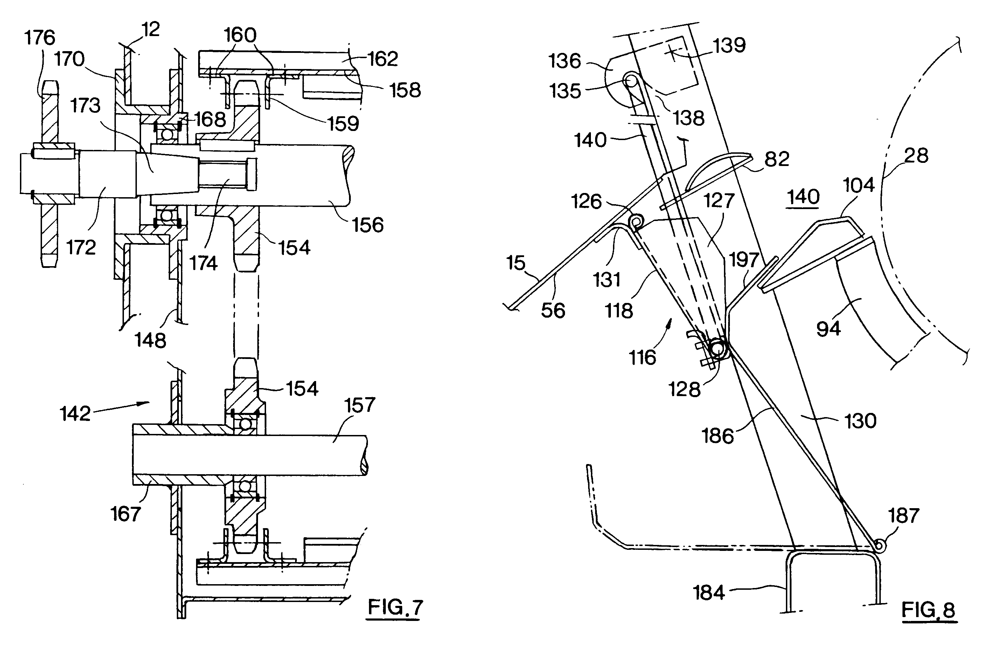

Grain and chaff material separated through the concaves of the threshing and separating mechanism 26 are collected and transported rearwardly by the conveyor 40 already referred to and which is shown in Figures 6 and 7 in more details. The conveyor 40 is housed in a self-supporting frame or housing 142 comprising a bottom wall 144, a semicircular front wall 146 and side walls 148 which are interconnected by a pair of transversely extending reinforcement beams 150. The conveyor 40, in the form of an endless chain and slat apron conveyor, comprises two transversely spaced chains 152, each thereof being provided proximate to a respective side wall 148 and respectively being extended over a pair of sprockets 154 supported by transversely oriented, spaced apart shafts 156 and 157. At equidistant spacings along the length of each chain 152, transversely extending, angled slats 158 are attached to links 159 furnished with a supporting surface 160. The front face of each slat 158 is fitted with a flexible strip 162 operable to engage the grain and chaff material .

The conveyor 40 is driven in a clockwise direction as seen in Figure 1, or otherwise said, the conveyor 40 is of the so called "overshot" type which means that the crop is conveyed at the upper side thereof. To this end, a drag board 164, spanning the total width of the conveyor 40 and covering the shafts 156 and 157 with bent end portions 166, is rigidly attached to the beams 150 in order to form a stationary, upwardly and rearwardly inclined floor over which the crop is urged by the impelling action of the strips 162. Said end portions 166 prevent contact between the transported crop material and the shafts 156, 157 in order to keep the latter clean even under adverse harvesting conditions, whereby the grain and chaff material may be mixed with wet and sticky particles of soil and seeds of weed. It has been experienced that under such harvesting conditions, also the drag board 164 is not prone of contamination as the flexible strips 162 sweep the upper surface thereof while transporting the crop.

The distance between successive strips 162 on the one hand and the height of these strips 162 on the other hand have been chosen in relation to as well the fore-and-aft inclination of the conveyor 40 (which is approximately 45°) as the drive speed thereof for optimizing the transport capacity of the arrangement under various operating conditions.

The shaft 157 at the lower, receiving end of the conveyor 40, does not rotate during operation and is fixedly supported by brackets 167, slidably attached to the side walls 148 by intermediary of a conventional tensioning mechanism (not shown) for taking up eventual stretch of the chains 152. As the shaft 157 is stationary, the corresponding sprockets 154 are rotatably carried thereon. Contrary thereto, the upper shaft 156 at the discharge end of the conveyor 40 imparts rotation to the latter and therefore the corresponding sprockets are fixedly connected thereto. Brackets 168, rotatably supporting the shaft 156, are incorporated in the side walls 148 of the conveyor housing 142 and, in turn, are held by further brackets 170 united with opposite side members of the combine frame 12. A stub shaft 172, having a conical portion 173 and a threaded end 174, is screwed into a receiving seat provided in the shaft 156 at one side thereof. A sprocket 176, which is fitted on the stub shaft 172, is incorporated in a drive train (not shown) of the combine harvester for driving the conveyor 40 at a speed of approximately 1 m/sec. As both lateral sides of the conveyor 40 are each others mirror image, except for what the drive arrangement 172, 176 is concerned, only the side thereof containing said drive arrangement 172, 176 has been shown in Figure 7.

The brackets 168 supporting the upper shaft 156 are slidably received by the brackets 170 enabling the conveyor 40 to be pivoted as a unitary structure around the coincident axis of the shaft 156 between an operative, material receiving position and an inoperative, retracted position, respectively shown in full and phantom lines in Figure 6. To ease the foregoing pivoting manoeuvre on the part of the combine operator, a screw jack 178 or any other type of suitable actuator is interconnected between a rigid transverse beam 180 of the combine frame 12, located at the back side of the conveyor 40, and an anchoring point proximate to the lowermost part of the conveyor housing 142; the screw jack 178 being operable to change the relative position of said housing 142 by being retracted or extended from an easy accessible location at the side of the combine harvester 10. Although additional locking means for securing the housing 142 in one of its extreme positions are not really required since the screw jack 178 can be blocked in any desired position, they nevertheless may be provided to further improve safety. For pivoting the housing 142 back and forth between operative and inoperative positions, it is unnecessary to disconnect the drive to the conveyor 40 therefrom as the housing 142 is pivoted around the axis of the drive shaft 156.

It will be appreciated from Figure 7 that the combine frame 12 transversely extends beyond the conveyor housing 142 and hence encloses the latter. Provided that the drive shaft 156 is deprived from its drive arrangement 172, 176, the conveyor 40 can be slid into the combine frame 12 as a unit, whereafter the brackets 170 are partially inserted through apertures in said frame 12 for receiving the brackets 168 and hence supporting the complete conveyor 40. Once the conveyor 40 in place, the stub shaft 172, carrying the sprocket 176, is screwed into the shaft 156 for drivingly connecting the latter to a drive arrangement of the combine harvester, as already mentioned. Care is taken that the sense of rotation for mounting the stub shaft 172 into the shaft 156 on the one hand and the normal sense of rotation of the conveyor 40 on the other hand are identical, in order to prevent that the stub shaft 172 would get unscrewed during operation of the conveyor 40.

Flexible strips (not shown) seal off any eventual apertures which may exist between the lateral sides of the conveyor housing 142, when in the grain receiving position, and the inner lateral sides of the combine frame 12, the foregoing to avoid any loss of grain therethrough during harvesting operation. The upper transverse end of the housings front wall 146 engages a sealing strip 182 attached to a slanting plate 183 fixed to the traction beam 184 of the harvester 10. Inspection cover means, in the form of an inspection door 186, are pivotally attached at 187 to the traction beam 184; said door 186, when in a closed position, extending in alignment with the plate 183 towards the lowermost edge of the stone trap 116 and held in that position by latch means which are not shown.

At the discharge end 188 of the conveyor 40, a reception plate 90 is operable to guide grain and chaff material issuing from said conveyor 40 towards the cleaning apparatus 42, comprising a.o. a conventional corrugated grain pan 192 and conventional sieves 44. The complete cleaning apparatus 42 is supported by a generally rectangular sub frame 194 which is pivotally mounted at its forward and rearward ends (only the forward end 195 being indicated) on the frame 12 of the combine harvester 10. When crop is being harvested on transversely inclined ground, position control means (not shown) are operable to automatically pivot the sub frame 194 so as to maintain the cleaning apparatus 42 horizontal, as seen in a transverse direction. For more details on this self-levelling cleaning apparatus, reference is made to GB-B-2.052.238.

As best can be observed in Figure 6, the overall configuration of the threshing and separating means 26, the cleaning apparatus 42 and the intermediate conveyor 40 displays the following peculiar features. As a result of the fact that the inlet gap 62 of the concave means 32 is located proximate to the horizontal median plane of the threshing cylinder 38, harvested crop material has to be fed in from an upward location. Taking account of route regulations which prescribe the maximum overall dimensions of mobile machinery using public roads and considering further that the grain tank 48 is mainly positioned above the threshing means 26, the foregoing way of feeding crop material to the cylinder 38 results in a configuration whereby the latter is mounted considerably lower in the combine frame 12 when compared to conventional combine harvesters, in which the layer of crop is fed to the thresher drum in a nearly horizontal direction. All this implies that grain and chaff material separated through the concave means 32 has to be collected at a rather low level before conveying it rearwardly to the cleaning mechanism.

Considering said cleaning mechanism 42, it already has been explained that the cleaning mechanism as a unitary structure is pivotable around a fore-and-aft extending axis for permitting said structure to be pivoted to a substantially horizontal position, when the combine harvester is transversely inclined relative to the vertical. It readily will be appreciated that during pivotal movement of the cleaning mechanism 42 from a non-pivoted position to an extreme pivoted position, the longitudinally extending sides of said cleaning mechanism 42 travel a considerable distance along the interior of the combine frame 12, demanding ample free space above the cleaning mechanism for allowing unobstructed swivelling thereof. This also implies that the stationary discharge end 188 of the conveyor 40 has to surmount the grain receiving front of the grain pan 192 considerably in order to avoid interference therebetween when operating on steep side hills and to ensure that no part of the grain pan front, irrespective of its relative position, may surmount said discharge end 188.

Concluding from the foregoing, separated grain and chaff material has to be conveyed from a level lower than conventional on the one hand to a level higher than conventional on the other hand. This problem has been solved by the configuration of Figure 6 in which the threshing cylinder 28 with its cooperating concaves 94 and 96 are disposed at least in part in a kind of transversely extending V-shaped trough 196, which is defined at its front side by the stone trap 116, the inspection door 186 and the slanting plate 183 and at its rear side by the conveyor 40. The slanting front side of the trough 196 is operable to direct any separated material which falls thereon towards the lowermost material receiving end of the conveyor 40, which transfers this material, together with material directly received from the concaves 94 and 96, upwardly and rearwardly towards the front of the cleaning mechanism 42.

The interior of the trough 196 and hence the threshing and separating means 26, in particular the threshing cylinder 28 and the concave means 32, and also the grain transporting side of the conveyor 40, are readily accessible for servicing from different sides of the trough 196 by means already referred to above. Indeed, by pivoting the conveyor 40 towards its retracted position abutting thereby the transverse frame beam 180, the rearward side of the trough is partially opened at its lowermost end, creating an aperture between the slanting plate 183 at the back side of the traction beam 184 and the lower part of the conveyor 40. The semicircular extending concaves 94 and 96 thereby become readily accessible in a generally vertical, upward direction. The lower part of the threshing cylinder 28 can be inspected through the meshes of the concaves 94 and 96 or may be reached for eventual repair by removing said concaves 94,96.

Access to the interior of the trough 196 further may be enabled by pivoting the inspection door 186 in the front side thereof to an open position, as indicated in phantom in Figure 6, whereby the traction beam 184 serves as an abutment for said door 186 so that the latter is maintained in a horizontal position, forming a kind of working platform for the operator on which tools can be stored near at hand. Alternatively, the inspection door 186 detachably may be connected to the traction beam 184 enabling the complete removal thereof.

Access to the threshing means 26 thus also can be gained from between the traction beam 184 and the feeder house 15, preferably with the latter in its raised, inoperative position. Accessibility through the front side of the trough is still further improved by removing the stone trap 116, what simply can be done by unlatching the latch member 136 and extracting the keys 132 from the stone trap supporting brackets 129. In a preferred embodiment, the crop detaining element 82 is also detachably supported by the combine frame 12 so that after removal of said element 82 also the discharge end of the crop elevator 24 and the deflector beater 38 easily can be reached.

Alternative embodiments of the stone trap 116 and the inspection door 186 are shown in Figure 8. In this arrangement, the inspection door 186 does not stop short of the bottom edge of the stone trap 116, but comprises an extended plate 197 therebehind which engages an upper surface of the transition beam 104. Well considered, the plate 197 effectively substitutes the bottom wall 122, 124 of the stone trap 116 as depicted in Figure 4. The alternative stone trap 116 therefore only needs a simplified structure comprising in essence the side walls 127 and the front plate 118, which has been enveloped around and fixedly attached to the pivot shaft 128.

The arrangement of Figure 8 provides several advantages. When the stone trap front plate 118 is pivoted to a stone dumping position, the plate 197 remains in its engaged position with the transition beam 104, as such preventing that stones or other foreign objects could fall into the gap between the stone trap pivot shaft 128 and said beam 104 and thus would get mixed with separated grain on the grain conveyor 40. The inspection door 186 in its alternative form does not require latch means for securing it in a closed position as the transverse bottom edge of the stone trap 116 prevents the door 186 from opening. On the one hand, this could be seen as a disadvantage as for enabling opening the door 186, the stone trap 116 first has to be removed. On the other hand however, the stone trap 116 is relatively light, and thus removal thereof is easily and rapidly accomplished, whereafter the door 186 falls open automatically. Accordingly, by unlatching only one element, being the stone trap 116, a full access through the front side of the trough 196 is obtained.

It thus readily will be appreciated that the threshing and separating means 26, in particular the deflector beater 38, the concaves 94,96 and the threshing cylinder 28 are easily accessible thanks to the partial incorporation of these elements in the trough 196 of which as well the front side as the rear side can be opened and/or removed. All this further implies that the threshing means become accessible from different sides at the same time. Consequently, when the nature of eventual servicing or repair would require the combined effort of several people, the trough 196 may be opened at both transverse sides so that those people simultaneously can gain access into the trough 196 from different sides allowing them to help each other.

## Claims

1. A combine harvester (10) comprising threshing and separating means (26) including a rotatable threshing drum (28) and cooperating concave means (32) for processing harvested crop material therebetween as this material passes from an inlet (62) to an outlet of said concave means (32);
the concave means (32) comprising at least a leading portion (94) and a trailing portion (96) as seen in the direction from said inlet (62) to said outlet and
the leading concave portion (94) being adjustable relative to the threshing drum (28) during operation of the combine harvester (10);
said combine harvester (10) being characterised in that the trailing portion (96) has a fixed position relative to the threshing drum (28).

2. A combine harvester according to claim 1 characterised in that the concave means (32) extend over an arc of at least 100° around the threshing drum (28).

3. A combine harvester according to claims 1 or 2 characterized in that the concave means (32) extend over an arc of approximately 180° around the threshing drum (28); the arrangement being such that more than half of said arc is formed by the leading concave portion (94).

4. A combine harvester according to any of the preceding claims characterized in that the leading concave portion (94) extends around the threshing drum (28) over an arc of approximately 100°.

5. A combine harvester according to any of the preceding claims characterized in that the leading concave portion (94) mainly has a threshing function and comprises a grid-like structure including :
- a frame formed by arcuate side members (100) and front and rear transverse bars (101);
- transversely oriented threshing bars (98) fixedly connected to said frame and mounted edge-on relative to the threshing surface of the concave (94); and
- arcuate slats and wires provided parallel to said side members (100) and interconnecting the threshing bars (98); the arrangement being such that the threshing bars (98) extend beyond the arcuate working surface formed by respectively said side members (100), said slats and said wires.

6. A combine harvester according to any of the preceding claims characterized in that the trailing concave portion (96) mainly has a separating function and comprises a grid-like structure including :
- a frame formed by arcuate side members (110) and front and rear transverse bars (108);
- transversely oriented slats (109) fixedly connected to said frame and mounted edge-on relative to the separating surface of the concave (96); and
- arcuate slats and wires provided parallel to said side members (110) and interconnecting said transverse slats (109); the arrangement being such that said transverse slats (109) do not extend beyond the arcuate working surface formed by respectively said side members (110), said slats and said wires.

7. A combine harvester according to claim 6 when appended to claim 5 characterized in that the size of the mesh of the leading concave portion (94) is smaller than the size of the mesh of the trailing concave portion (96).

8. A combine harvester according to any of the preceding claims characterized in that the trailing concave portion (96) is pre-adjustably mounted in the combine frame (12) whereas the leading concave portion (94) is adjustable during operation by means of a rod and bell crank arrangement (102) operable from a location remote from said concave portion (94).

9. A combine harvester according to any of the claims 3 to 8 wherein the threshing and separating means (26) further comprise a straw beater (30) with a cooperating concave (34) disposed rearwardly of the threshing drum (28) as seen in the direction of crop flow through the threshing and separating means (26) and
characterized in that :
- the concave means (32) extend around the lower half of the threshing drum (28), and
- the trailing concave portion (96) links up with the concave (34) of said straw beater (30).

## Patentansprüche

1. Mähdrescher (10) mit Dresch- und Trenneinrichtungen (26), die eine in Drehung versetzbare Dreschtrommel (28) und damit zusammenwirkende Dreschkorbeinrichtungen (32) zur Verarbeitung von geerntetem Erntematerial zwischen diesen Teilen einschließt, während dieses Material von einem Einlaß (62) zu einem Auslaß der Dreschkorbeinrichtungen (32) läuft,
- wobei die Dreschkorbeinrichtungen (32) zumindestens einen vornliegenden Abschnitt (94) und einen hintenliegenden Abschnitt (96) bei Betrachtung in der Richtung von dem Einlaß (62) zu dem Auslaß umfassen, und
- wobei der vornliegende Dreschkorbabschnitt (94) gegenüber der Dreschtrommel (28) während des Betriebs des Mähdreschers (10) einstellbar ist, und
- wobei der Mähdrescher (10) dadurch gekennzeichnet ist, daß der hintenliegende Abschnitt (96) eine feste Position bezüglich der Dreschtrommel (28) aufweist.

2. Mähdrescher nach Anspruch 1,
dadurch gekennzeichnet, daß sich die Dreschkorbeinrichtungen (32) über einen Winkel von zumindestens 100° um die Dreschtrommel (28) herum erstrecken.

3. Mähdrescher nach Anspruch 1 oder 2,
dadurch gekennzeichnet, daß sich die Dreschkorbeinrichtungen (32) über einen Bogen von angenähert 180° um die Dreschtrommel (28) herum erstrecken, wobei die Anordnung derart ist, daß mehr als die Hälfte des Bogens durch den vornliegenden Dreschkorbabschnitt (94) gebildet ist.

4. Mähdrescher nach einem der vorhergehenden Ansprüche,
dadurch gekennzeichnet, daß sich der vornliegende Dreschkorbabschnitt (94) um die Dreschtrommel (28) über einen Bogen von angenähert 100° erstreckt.

5. Mähdrescher nach einem der vorhergehenden Ansprüche,
dadurch gekennzeichnet, daß der vornliegende Dreschkorbabschnitt (94) hauptsächlich eine Dreschfunktion hat und eine gitterartige Struktur umfaßt, die folgende Teile einschließt:
- einen durch bogenförmige Seitenteile (100) und vordere und hintere Querstäbe (101) gebildeten Rahmen,
- in Querrichtung ausgerichtete Dreschstäbe (98), die fest mit dem Rahmen verbunden sind und mit ihrer Kante nach oben bezüglich der Dreschoberfläche des Dreschkorbes (94) befestigt sind, und
- bogenförmige Leisten und Drähte, die parallel zu den Seitenteilen (100) vorgesehen sind und die Dreschstäbe (98) miteinander verbinden, wobei die Anordnung derart ist, daß sich die Dreschstäbe (98) über die bogenförmige Arbeitsoberfläche hinaus erstrecken, die jeweils durch die Seitenteile (100), die Leisten und die Drähte gebildet ist.

6. Mähdrescher nach einem der vorhergehenden Ansprüche,
dadurch gekennzeichnet, daß der hintenliegende Dreschkorbabschnitt (96) hauptsächlich eine Trennfunktion hat und eine gitterförmige Struktur umfaßt, die folgende Teile einschließt:
- einen durch bogenförmige Seitenteile (110) und vordere und hintere Querstäbe (108) gebildeten Rahmen,
- in Querrichtung ausgerichtete Leisten (109), die fest mit dem Rahmen verbunden sind und mit ihrer Kante auf die Trennoberfläche des Dreschkorbes (96) gerichtet befestigt sind, und
- bogenförmige Leisten und Drähte, die parallel zu den Seitenteilen (110) vorgesehen sind und die querverlaufenden Leisten (109) miteinander verbinden, wobei die Anordnung derart ist, daß die querverlaufenden Leisten (109) sich nicht über die bogenförmige Arbeitsoberfläche hinaus erstrecken, die jeweils durch die Seitenteile (110), die Leisten und die Drähte gebildet ist.

7. Mähdrescher nach Anspruch 6, unter Rückbeziehung auf Anspruch 5,
dadurch gekennzeichnet, daß die Maschenweite des vornliegenden Dreschkorbabschnittes (94) kleiner als die Maschenweite des hintenliegenden Dreschkorbabschnittes (96) ist.

8. Mähdrescher nach einem der vorhergehenden Ansprüche,
dadurch gekennzeichnet, daß der hintenliegende Dreschkorbabschnitt (96) in voreinstellbarer Weise in dem Mähdrescher-Rahmen (12) befestigt ist, während der vornliegende Dreschkorbabschnitt (94) während des Betriebs mit Hilfe einer Stangen- und Winkelhebelanordnung (102) einstellbar ist, die von einer von dem Dreschkorbabschnitt (94) entfernten Stelle betätigbar ist.

9. Mähdrescher nach einem der Ansprüche 3 bis 8,
bei dem die Dresch- und Trenneinrichtungen (26) weiterhin eine Strohwendetrommel (30) mit einem damit zusammenwirkenden Dreschkorb (34) umfassen, der bei Betrachtung in der Richtung der Erntematerialströmung durch die Dresch- und Trenneinrichtungen (26) rückwärts von der Dreschtrommel (28) angeordnet ist, dadurch gekennzeichnet, daß
- die Dreschkorbeinrichtungen (32) sich um die untere Hälfte der Dreschtrommel (28) herum erstrecken, und
- der hintenliegende Dreschkorbabschnitt (96) sich an den Dreschkorb (34) der Strohwendetrommel (30) anschließt.

## Revendications

1. Moissonneuse-batteuse (10) avec des moyens de battage et de séparation (26) comprenant un tambour rotatif de battage (28) et des moyens de contre-battage (32) associés pour effectuer entre eux le processus de battage du matériau de récolte lorsque ce matériau est transféré de l'entrée (62) à la sortie desdits moyens de contre-battage (32);
les moyens de contre-battage (32) comprenant au moins une portion de contre-batteur menant (94) et une portion de contre-batteur mené (96) lorsqu'elles sont vues depuis ladite entrée (62) vers ladite sortie, et
la portion de contre-batteur menant (94) étant réglable pendant le fonctionnement de la moissonneuse-batteuse (10) par rapport au tambour de battage (28);
ladite moissonneuse-batteuse (10) étant caractérisée en ce que la portion de contre-batteur mené (96) a une position fixe par rapport au tambour de battage (28).

2. Moissonneuse-batteuse selon la revendication 1 caractérisée en ce que les moyens de contre-battage (32) s'étendent sur un arc d'au moins 100° autour du tambour de battage (28).

3. Moissonneuse-batteuse selon la revendications 1 ou 2 caractérisée en ce que les moyens de contre-battage (32) s'étendent sur un arc d'environ 180° autour du tambour de battage (28); le dispositif étant tel que plus de la moitié dudit arc est constituée par la portion du contre-batteur menant (94).

4. Moissonneuse-batteuse selon l'une quelconque des revendications précédentes, caractérisée en ce que la portion du contre-batteur menant (94) s'étend autour du tambour de battage (28) sur un arc d'environ 100°.

5. Moissonneuse-batteuse selon l'une quelconque des revendications précédentes, caractérisée en ce que la portion du contre-batteur menant (94) a principalement une fonction de battage et comprend une structure en grillage incluant:
- un châssis constitué par des éléments latéraux arqués (100) et des barres transversales avant et arrière (101);
- des barres de battage (98) orientées transversalement, reliées fixement audit châssis et montées de champ par rapport à la surface de battage du contre-batteur (94); et
- des lamelles arquées et des fils placés parallèlement auxdits éléments latéraux (100) et interconnectant les barres de battage (98); le dispositif étant tel que les barres de battage (98) dépassent de la surface arquée constituée, respectivement, par lesdits éléments latéraux (100), lesdites lamelles et lesdits fils.

6. Moissonneuse-batteuse selon l'une quelconque des revendications précédentes, caractérisée en ce que la portion de contre-batteur mené (96) a principalement une fonction de séparation et comprend une structure en grillage comprenant:
- un châssis constitué par des éléments latéraux 110 et des barres transversales avant et arrière (108);
- des lamelles (109) orientées transversalement, reliées fixement au dit châssis et montées de champ par rapport à la surface de séparation du contre-batteur (96); et
- des lamelles arquées et des fils placés parallèlement aux dits éléments latéraux (110) et interconnectant lesdites lamelles transversales (109); le dispositif étant tel que lesdites lamelles transversales (109) ne dépassent pas la surface de travail constituée, respectivement, par lesdits éléments latéraux (110), lesdites lamelles et lesdits fils.

7. Moissonneuse-batteuse selon la revendication 6, lorsqu'elle est annexée à la revendication 5, caractérisée en ce que la taille des mailles de la portion de contre-batteur menant (94) est plus petite que la taille des mailles de la portion de contre-batteur mené (96).

8. Moissonneuse-batteuse selon l'une quelconque des revendications précédentes, caractérisée en ce que la portion de contre-batteur mené (96) est montée de manière pré-réglée au châssis de la machine (12), tandis que la portion de contre-batteur menant est réglable en fonctionnement au moyen d'un dispositif de bielles et de leviers coudés (102) actionnable à partir d'un emplacement à distance par rapport à ladite portion de contre-batteur (94).

9. Moissonneuse-batteuse selon l'une quelconque des revendications 3 à 8 où les moyens de battage et de séparation (26) comprennent en outre un batteur de paille (30) muni d'un contre-batteur (34) associé disposé à l'arrière du tambour de battage (28), vu dans la direction du flux de matériau de récolte à travers les moyens de battage et de séparation (26) et
caractérisée en ce que:
- les moyens de contre-battage (32) s'étendent autour de la moitié inférieure du tambour de battage (28), et
- la portion de contre-batteur mené (96) rejoint le contre-batteur (34) dudit batteur de paille (30).
